# EUROPEAN PATENT APPLICATION

(11) **EP 4 814 860 A1**
(43) Date of publication of application: **30.09.2026**
(21) Application number: 25165936.3
(22) Date of filing: 25.03.2025
(51) Int. Cl.: G06T 7/00

(54) **A METHOD FOR PERFORMING A DETECTION OF A SPECIFIC ANOMALOUS PATTERN OF MANUFACTURING COMPONENTS**

(71) Applicant: Robert Bosch GmbH, 70442 Stuttgart (DE)
(72) Inventor: Podder, Itilekha, 1093 Budapest (HU)

(57) **Abstract**

The invention relates to a method (100) for performing a detection of a specific anomalous pattern of manufacturing components (4), comprising:
- Providing (101) training data, the training data comprising a first set of images depicting manufacturing components (4) with different anomalous patterns,
- Training (102) a machine learning model (1) based on the provided training data for detecting the different anomalous patterns,
- Providing (103) a second set of images (3) depicting manufacturing components (4) with the specific anomalous pattern,
- Fine-tuning (104) the machine learning model (1) for detecting the specific anomalous pattern based on the second set of images (3),
- Performing (105) the detection of the specific anomalous pattern of manufacturing components (4) by utilizing the fine-tuned machine learning model (1).

Furthermore, the invention relates to a computer program, an apparatus, and a storage medium for this purpose.

## Description

The invention relates to a method for performing a detection of a specific anomalous pattern of manufacturing components. Furthermore, the invention relates to a computer program, an apparatus, and a storage medium for this purpose.

### State of the art

In semiconductor manufacturing, precise object detection is crucial for ensuring high product quality and operational efficiency. Traditional deep learning models, such as Convolutional Neural Networks (CNNs) and Region-Based CNNs (R-CNNs), face significant technical challenges in this domain. These models often overfit when trained on low-variance datasets-common in manufacturing settings with consistent processes and limited defect types-resulting in poor generalization to new or unseen defects. Conversely, they underfit on high-variance datasets characterized by numerous defect types, including rare or novel defects, due to insufficient data representation for each class. Additionally, the dynamic nature of semiconductor manufacturing, with frequent changes in equipment and procedures, requires models that can adapt quickly without the need for time-consuming and computationally intensive retraining from scratch.

Traditional models demand large, labelled datasets to achieve high accuracy, making data collection and annotation resource-intensive and costly. There is also a pressing need for real-time defect detection to prevent defective products from advancing in the production line, but traditional models often introduce latency incompatible with high-speed manufacturing requirements. Moreover, models trained in one setting may not generalize well to others without extensive retraining, hindering scalability across diverse manufacturing environments. Handling imbalanced datasets-with a majority of non-defective samples and few defective ones-is problematic, leading to high false- negative rates where critical defects are missed. Finally, strict regulatory standards demand high accuracy and explainability in defect detection systems, but traditional deep learning models, often considered "black boxes," fail to provide the necessary interpretability.

Currently, semiconductor manufacturers utilize object detection solutions based on traditional deep learning architectures such as Convolutional Neural Networks (CNNs), Region-Based CNNs (R-CNNs), You Only Look Once (YOLO), and Single Shot MultiBox Detector (SSD). While effective with large, diverse datasets, these models struggle with low variance datasets (limited diversity leading to overfitting) and high variance datasets (extreme diversity requiring vast amounts of data). Such scenarios are common in semiconductor manufacturing due to varying processes and defect types. Traditional models are not designed for rapid adaptation to new defects or process changes, making retraining time-consuming and resource-intensive, which is misaligned with the industry's need for immediate detection and response. These models are applied in various areas, including defect identification and quality control (wafer and component inspection), equipment monitoring (machine vision systems for anomaly detection), process optimization (yield enhancement and automation), assembly and packaging (component placement and packaging inspection), and research and development (material analysis and process improvement). However, their limitations in handling datasets with low or high variance create a technical gap.

### Disclosure of the invention

According to aspects of the invention a method with the features of claim 1, a computer program with the features of claim 10, a data processing apparatus with the features of claim 11 as well as a computer-readable storage medium with the features of claim 12 are provided. Further features and details of the invention are disclosed in the respective dependent claims, the description and the drawings. Features and details described in the context to the inventive method also correspond to the inventive computer program, the inventive data processing apparatus as well as the inventive computer-readable storage medium, and vice versa in each case.

According to an aspect of the invention a method for performing a detection of a specific anomalous pattern, for example a specific defect, of manufacturing components is provided, comprising:
- Providing training data, the training data comprising a first set of images depicting manufacturing components with different anomalous patterns, for example different types of defects, wherein the training data may be divided into respective groups for each of the different anomalous patterns,
- Training a machine learning model, for example an object detection model with a Faster R-CNN, YOLO or SSD architecture, based on the provided training data for detecting the different anomalous patterns, wherein detecting a respective anomalous pattern of the different anomalous patterns may be referred to as a task, wherein, during the training, parameters, particularly weights, of the machine learning model may be optimized for the detecting of the different anomalous patterns by utilizing a loss function,
- Providing a second set of images, which in the context of the present invention may also be referred to as a support set, depicting manufacturing components with the specific anomalous pattern, the specific anomalous pattern particularly being a new anomalous pattern that is not comprised in the training data,
- Fine-tuning the machine learning model for detecting the specific anomalous pattern based on the second set of images, wherein the fine-tuning may comprise performing gradient descent updates on (the) parameters, particularly, weights of the machine learning model,
- Performing the detection or initiating a performing of the detection of the specific anomalous pattern of manufacturing components by utilizing the fine-tuned machine learning model, wherein performing the detection may comprise a utilization of the fine-tuned machine learning model in an inference phase thereof, particularly in a real-time application, based on newly provided images representing manufacturing components.

By means of the method according to the invention, it is possible to effectively detect specific anomalous patterns in manufacturing components. The training data, encompassing a variety of anomalous patterns, may equip the machine learning model with a broad understanding of anomalous patterns. Fine-tuning the machine learning model on a dedicated set of images featuring the specific anomalous pattern refines its ability to identify that specific anomalous pattern with a high accuracy. The second set of images may advantageously only need to comprise a small number of samples while still enabling the detection of the specific anomalous pattern with the high accuracy. This is due to the fact, that the machine learning model is already trained to detect anomalous patterns in general and only needs to be adapted to detecting the specific anomalous pattern. This targeted approach may enhance the machine learning model's performance for detecting the desired anomalous pattern while leveraging the foundational knowledge gained from the initial training phase. The method may, for example, offer a practical solution for real-time anomaly detection in manufacturing processes, contributing to improved quality control and reduced production defects.

It is further possible that a part of the training data is separated to be provided as validation data, which may also be referred to as query set in the context of the present invention, wherein the method further comprises after the training:
- Evaluating the machine learning model based on a metric that quantifies a precision of detecting the different anomalous patterns utilizing the validation data,
- Adapting the machine learning model, for example by modifying its parameters, particularly weights, based on a result of the evaluation.

The accuracy and performance of the fine-tuned machine learning model may be improved by incorporating a validation step, i.e. the evaluation. By evaluating the machine learning model's performance on the validation data insights into its weaknesses may be gained. Based on this evaluation, the machine learning model parameters, for example its weights, may be further adjusted to enhance its precision in detecting the specific anomalous pattern. This iterative process of training, evaluation, and adaptation may lead to a more robust and reliable detection.

It is possible that the training and the fine-tuning are performed using different learning rates. By means of this differentiated approach the detection accuracy and efficiency during the training may be optimized.

It is further possible that the method further comprises:
- Performing a rotation and/or scaling of individual images in the training data and/or the second set of images before performing the training and/or the fine-tuning, wherein the rotated and/or scaled individual images are respectively provided as new images for the training data and/or the second set of images.

Incorporating rotations and/or scaling transformations during the initial training and/or the fine-tuning may enhance a robustness of the machine learning model. This data augmentation may introduce variations in the image data, enabling the machine learning model to learn a more generalized representation of the anomalous patterns, reducing susceptibility to variations in orientation or size. Furthermore, this technique may mitigate overfitting by exposing the machine learning model to a wider range of image samples during training and/or fine-tuning, leading to improved performance on unseen data.

It is possible that the method further comprises:
- Generating synthetic images, the synthetic images depicting manufacturing components with the different anomalous patterns and/or the specific anomalous pattern,
- Adding the generated synthetic images to the training data and/or the second set of images before performing the training and/or the fine-tuning.

It is thereby possible to increase the size and diversity of the initial training dataset and/or the dataset used for fine-tuning by incorporating synthetically generated images. This may lead to a more robust and accurate machine learning model capable of detecting a wider range of anomalous patterns, including subtle variations. Synthetic data generation may also allow for a controlled manipulation of image characteristics, enabling the machine learning model to learn from edge cases and improve its generalization capabilities.

It is further possible that the manufacturing components are wafers and the anomalous patterns represent defects or the anomalous patterns in the wafers, wherein the method further comprises:
- Initiating a deployment of the fine-tuned machine learning model in a wafer production environment,
wherein the second set of images is provided based on sensor data captured by at least one sensor in the production environment and the detection of the specific anomalous pattern is performed in the production environment. It is thereby possible to monitor a wafer production in real-time, enabling immediate identification and response to defects or the anomalous patterns. The deployment of the fine-tuned machine learning model in the production environment may allow for a proactive quality control and reduce the likelihood of defective wafers reaching later stages of manufacturing. This real-time monitoring capability may improve overall production efficiency and reduce costs associated with identifying and rectifying defects after they have occurred.

It is possible that the training data and/or the second set of images comprise labels that denote a respective anomalous pattern of the different anomalous patterns and/or the specific anomalous pattern in a respective image, wherein the training and/or the fine-tuning is performed as a supervised training using the labels. The machine learning model's performance may be enhanced by incorporating labeled data. Supervised training may utilize these labels to guide the learning process, enabling the machine learning model to more accurately identify and classify anomalous patterns. This approach may lead to improved detection accuracy and training efficiency. The use of labels may allow for a more targeted and precise training process.

It is also possible that the training data and/or the second set of images do not comprise (explicit) labels for the different anomalous patterns and/or the specific anomalous pattern, wherein the training and/or the fine-tuning is performed as an unsupervised training. Instead of relying on predefined labels, the machine learning model may then autonomously identify underlying structures and deviations within the data. This method may enhance the machine learning model's ability to detect and classify anomalous patterns by learning inherent distributions and distinguishing normal from abnormal instances. Unsupervised training may improve detection accuracy and efficiency by leveraging clustering, autoencoders, or other anomaly detection techniques to refine the learning process without requiring labeled data.

It is further possible that, in case the specific anomalous pattern is detected during performing the detection, the method further comprises at least one of the following steps:
- Initiating an alert, particularly to a manufacturing execution system, to trigger at least one automated workflow for equipment maintenance and/or process adjustments based on the detected specific anomalous pattern,
- Generating a report based on the detected specific anomalous pattern.

By initiating the alert to the manufacturing execution system (MES) upon detecting a specific anomalous pattern, automated workflows can be triggered, enabling immediate equipment maintenance or process adjustments. This proactive approach may minimize a downtime in a production process, reduce potential defects, and improve overall production efficiency. Moreover, generating the report based on detected anomalous patterns may provide valuable insights for process optimization and continuous improvement initiatives and may also be used in terms of regulatory compliance.

The machine learning model, is preferably trained for classification and in particular for object detection. The training can be intended to train the machine learning model by means of a training data set for classification, in particular for image classification, of image data such as digital images on the basis of pixels and/or pixel values, preferably edges or pixel attributes (of the image data). The image data or digital images can, for example, result from a recording by at least one sensor, preferably at least one camera. The classification can be intended to detect anomalous patterns in a manufacturing component depicted by the image data or digital images.

The terms 'classification' and 'image classification' can also refer to 'semantic segmentation', in particular in the form of pixel-by-pixel classification.

Accordingly, the training can result in at least one trained machine learning model that can be used for classification and/or object detection, particularly for detecting anomalous patterns. The application and thus the inference can be provided in a production environment, for example. The data points of the input data can, for example, be pixels of image data or be based on these in order to carry out the classification and/or object detection of the data points on the basis of the pixels. The input data can comprise sensor and/or image data which at least partially result from a capture with a sensor, preferably a camera sensor, and/or which have been at least partially synthesised, i.e. which in particular replicate the real data of a sensor. Specifically, it may be provided that the values of pixels, preferably pixels, of the image data represent an environment of a sensor and/or a production environment. Classification, preferably image classification and/or object detection, can be provided on the basis of these values. This makes it possible, for example, to detect the anomalous patterns. The image data may also, for example, be images from a radar sensor and/or an ultrasonic sensor and/or a LiDAR sensor and/or a thermal imaging camera. Accordingly, the images can also be radar images and/or ultrasonic images and/or thermal images and/or lidar images.

In another aspect of the invention, a computer program may be provided, in particular a computer program product, comprising instructions which, when the computer program is executed by at least one computer, cause the computer to carry out the method according to the invention. Thus, the computer program according to the invention can have the same advantages as have been described in detail with reference to a method according to the invention.

In another aspect of the invention, an apparatus for data processing may be provided, which is configured to execute the method according to the invention. As the apparatus, for example, at least one computer can be provided which executes the computer program according to the invention. The computer may include at least one processor that can be used to execute the computer program. Also, a non-volatile data memory may be provided in which the computer program may be stored and from which the computer program may be read by the processor for being carried out.

According to another aspect of the invention a computer-readable storage medium may be provided which comprises the computer program according to the invention and/or instructions which, when executed by at least one computer, cause the computer to carry out the steps of the method according to the invention. The storage medium may be formed as a data storage device such as a hard disk and/or a non-volatile memory and/or a memory card and/or a solid state drive. The storage medium may, for example, be integrated into the computer.

Furthermore, the method according to the invention may be implemented as a computer-implemented method. Alternatively or additionally, at least one of the disclosed method steps may be computer-implemented and/or automated.

Further advantages, features and details of the invention will be apparent from the following description, in which embodiments of the invention are described in detail with reference to the drawings. In this context, the features mentioned in the claims and in the description may each be essential to the invention individually or in any combination. Showing:
- Fig. 1:: A method, a production environment with a manufacturing component and a sensor, a computer program, a storage medium and apparatus according to embodiments of the invention,
- Fig. 2:: An adaptation process according to embodiments of the invention.

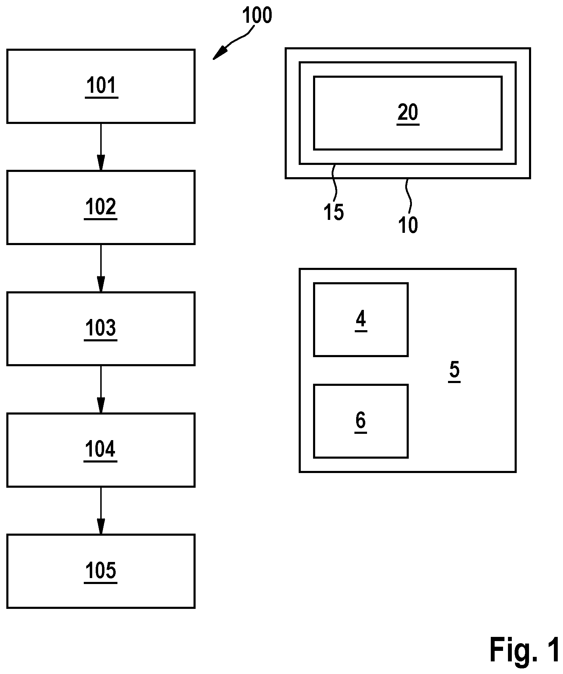

Fig. 1 shows a method 100, a production environment 5 with a manufacturing component 4 like a wafer and a sensor 6, a computer program 20, a storage medium 15 and apparatus 10 according to embodiments of the invention.

Fig. 1 particularly shows an embodiment of a method 100 for performing a detection of a specific anomalous pattern of manufacturing components 4. In a first step 101, training data is provided, the training data comprising a first set of images depicting manufacturing components 4 with different anomalous patterns.

In a second step 102, a machine learning model 1 is trained based on the provided training data for detecting the different anomalous patterns. In a third step 103, a second set of images 3 depicting manufacturing components 4 with the specific anomalous pattern is provided. In a fourth step 104, the machine learning model 1 is fine-tuned for detecting the specific anomalous pattern based on the second set of images 3. In a fifth step 105, the detection of the specific anomalous pattern of manufacturing components 4 is performed by utilizing the fine-tuned machine learning model 1.

The invention according to embodiments pertains to an object detection in semiconductor manufacturing. With the method according to the invention a detection of anomalous patterns like defects in semiconductor wafers may be improved. A goal is particularly to provide a machine learning model 1 that can accurately identify anomalous patterns, e.g. defects, in real-time, regardless of dataset variability, to ensure product quality and enhance manufacturing efficiency.

The methods according to the state of the art have limitations in handling datasets with low or high variance create a technical gap. The method according to the invention particularly addresses this gap by utilizing a Model-Agnostic Meta-Learning (MAML) approach, enhancing adaptability and efficiency in object detection within semiconductor manufacturing. This approach particularly aims to overcome the challenges of traditional machine learning models by enabling rapid adaptation to new tasks with minimal data, ensuring high performance without extensive retraining.

These limitations of the methods according to the state of the art particularly underscore a need for an advanced solution that may rapidly adapt to new types of anomalous patterns like defects and process changes with minimal data, reduce dependency on extensive datasets and computational resources, scale effectively across diverse manufacturing environments, meet real-time operational requirements to ensure timely detection, handle data imbalance and limited samples for rare anomalous patterns, particularly defects, and provide interpretability to satisfy regulatory and quality assurance standards. The Model-Agnostic Meta-Learning (MAML) framework according to the invention particularly aims to fulfil these needs by enabling machine learning models to quickly adapt to new tasks with minimal retraining, thereby enhancing defect detection accuracy and operational efficiency.

The method according to the invention particularly leverages a meta-learning framework combined with robust data handling strategies to tackle the challenges of limited and diverse datasets in semiconductor defect detection.

By utilizing Model-Agnostic Meta-Learning (MAML), the method according to the invention may offer a flexible machine learning model initialization compatible with architectures like Faster R-CNN and YOLO. This may enable a rapid adaptation to new tasks with minimal training time, allowing the machine learning model to quickly adjust to new defect types or process changes without extensive retraining.

During the meta-training phase, the machine learning model 1 may be exposed to a wide range of tasks representing various types of anomalous patterns and manufacturing conditions. Each task may employ support and query sets to enhance generalization. This task-oriented approach may ensure that the machine learning model 1 learns to adapt effectively to new and varied tasks, improving its performance on both common and rare defects.

The machine learning model 1 may use meta-learned parameters for quick adaptation to new datasets, effectively handling rare anomalous patterns through few-shot learning capabilities. This adaptive mechanism may allow the machine learning model to fine-tune itself using only a small amount of new data, addressing the issue of data scarcity for rare or novel defect types.

To improve robustness and balance high-variance datasets, data augmentation methods such as rotation and scaling may be implemented. Additionally, synthetic data generation techniques may be employed to augment the dataset, providing more examples of rare defects and helping to prevent overfitting.

The method according to the invention is particularly designed for compatibility with existing data pipelines and Manufacturing Execution Systems (MES). The method according to the invention may ensure easy deployment and scalability across multiple production lines. By integrating smoothly with current systems, the method according to the invention may minimize disruption and facilitates widespread adoption within the manufacturing environment.

The integrated approach according to the invention particularly addresses data scarcity and diversity while enhancing operational efficiency in semiconductor manufacturing. By enabling rapid adaptation to new types of anomalous patterns with minimal data, the MAML framework according to the invention may improve a detection accuracy and operational efficiency, meeting the industry's need for a scalable, adaptable, and efficient object detection solution.

The benefits of the method according to the invention may comprise the following:
- An improved Detection Accuracy, thereby addressing overfitting and underfitting issues, enhancing the machine learning model's ability to detect both common and rare defects,
- Reduced Training Time and Costs by minimizing a need for large labelled datasets and extensive retraining periods, saving time and computational resources,
- Increased Adaptability: The machine learning model according to the invention may quickly adapt to new manufacturing processes, equipment changes, or novel defect types, maintaining high operational efficiency,
- Real-Time Performance: The machine learning model according to the invention may meet the high-speed operational requirements of semiconductor manufacturing, enabling immediate detection and response to defects,
- Enhanced Handling of Data Imbalance: The method according to the invention may improve a detection of rare and critical anomalous patterns, e.g. defects, despite class imbalances in the datasets,
- Explainability: The method according to the invention may offer potential for greater interpretability compared to traditional "black box" machine learning models, aiding in meeting strict quality.

MAML is particularly a meta-learning algorithm designed to find machine learning model parameters that serve as a good initialization point for a variety of tasks. Therefore, the machine model may be trained not just on specific tasks but on the ability to adapt quickly to new tasks with minimal adjustments.

MAML may be model-agnostic, i.e. applicable to any machine learning model trained with gradient descent, making it versatile across different architectures. Further, it may enable a fast fine-tuning on new tasks using a small number of gradient steps and limited data.

An application to Object Detection of the method according to the invention may be performed as follows: First, a Meta-Training Phase may be performed. Therefore, diverse detection tasks by means of images representing various types of anomalous patterns and/or manufacturing conditions may be provided. In an inner loop (Task-Specific Adaptation), the machine learning model may, for each task, copy its parameters and adapt them using a small support set. In an outer loop (Meta-Update), the machine learning model's initial parameters may be updated based on a performance of the machine learning model on their respective query sets.

Then, an adaptation phase may be performed. When a new type of anomalous pattern emerges, the meta-trained machine learning model may be quickly fine-tuned using a small amount of labelled data (support set). The fine-tuned machine learning model may then be deployed for real-time detection of anomalous patterns in a production environment.

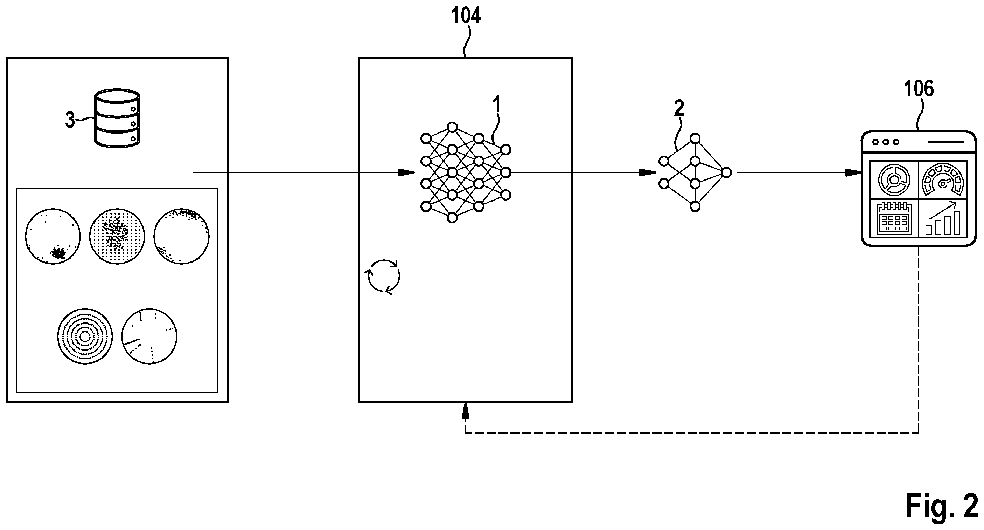

An adaptation process is illustrated in Fig. 2. At the centre is the pre-trained Meta-Trained machine learning model 1, which may receive an input from limited samples 3, i.e. the second set of images 3 according to the invention, of images representing a specific type of anomalous pattern. The machine learning model 1 particularly features an Inner Loop of rapid adaptation 104, i.e. particularly the fine-tuning 104 according to the invention, producing a Task-Specific fine-tuned machine learning model 2. Then, a performance evaluation 106 may be performed, wherein the fine-tuned machine learning model 2 may be assessed on the new task, i.e. regarding a detection of the specific type of anomalous pattern.

The Model-Agnostic Meta-Learning (MAML) may, for example, be implemented for wafer map defect detection by training a meta-model that learns to adapt quickly to new defect types with minimal data. In the meta-training phase, the machine learning model may be trained on multiple defect detection tasks (each representing different known defect types). For each task, the machine learning model may undergo an inner loop of a few gradient descent updates using a small support set to adapt its parameters to that task, and then it's evaluated on a query set to assess performance. The outer loop may update the meta-model's parameters based on the performance across all tasks, optimizing them for rapid adaptability. In the adaptation phase, when a new, previously unseen defect type is encountered, the meta-trained machine learning model may use these optimized parameters as a starting point and perform a few gradient descent updates with the limited new defect samples (support set) to create a task-specific fine-tuned machine learning model. This fine-tuned machine learning model may effectively detect the new defects despite having been trained on minimal data, leveraging the adaptability learned during meta-training to handle new defect detection tasks efficiently.

In the following, a specific example of the method according to the invention for a rapid detection of a new defect pattern in wafer maps due to Equipment Degradation is described.

At a semiconductor manufacturing facility, a photolithography machine may begin to experience lens degradation, leading to a new, subtle defect pattern on the wafer maps. This defect may appear as a slight blurring in certain areas of the wafer, affecting the performance of the integrated circuits produced.

The existing defect detection model is particularly not trained to recognize this new blurring defect. Only a few samples (e.g., 8 wafer maps) exhibit this defect, making it difficult to train a traditional model effectively. Prompt detection may be critical to prevent defective products from being shipped and to address the equipment issue causing the defect.

The method according to the invention may therefore be performed as follows: An engineer may collect the wafer maps displaying the new blurring defect. They may annotate the defect regions on these maps to create a labelled support set. The pre-trained MAML machine learning model according to the invention, previously meta-trained on a variety of defect detection tasks, may be ready for rapid adaptation. Using
the small support set, the machine learning model may perform a few gradient descent updates (e.g., 3 steps) to adapt its parameters specifically to detect the blurring defect. The fine-tuned machine learning model may then be deployed in the manufacturing line's inspection system. It may start processing incoming wafer maps in real-time, effectively detecting the new defect.

An immediate detection of the blurring defect may allow the quality control team to halt the affected production line. Maintenance may be performed on the photolithography machine to fix the lens issue. The production may resume with the defect eliminated, minimizing yield loss and preventing defective products from reaching customers.

The fine-tuned machine learning model may integrate with the existing image acquisition system that captures wafer maps post-photolithography. The detection alerts may be sent to the Manufacturing Execution System (MES), triggering automated workflows for equipment maintenance and process adjustments. Detailed defect reports may be generated for regulatory compliance and continuous improvement initiatives.

In the following, another example for the method according to the invention is described: A semiconductor manufacturer may switch to a new supplier for a substrate material to reduce costs. However, the new material may introduce microscopic impurities that cause a unique defect in the wafer etching process. The defect may manifest as tiny pits not previously seen, affecting the reliability of the final products.

The current detection models particularly do not recognize these microscopic pits. Only a handful of defective wafers (e.g., 12 samples) are identified before the issue is noticed. There may also be pressure to continue using the new material due to cost benefits, provided the defects can be effectively detected and managed.

A quality control team may collect the defective wafer samples. They may meticulously annotate the locations of the microscopic pits to create a support set for the new defect type. The MAML framework according to the invention may use the support set to adapt the meta-trained machine learning model. Through a few gradient descent updates (e.g., 4 steps), the machine learning model may adjust its parameters to detect the microscopic pit defects. The fine-tuned machine learning model may then be deployed into the wafer inspection equipment's software. It may begin scanning wafers in real-time, identifying the new defects with high accuracy.

The manufacturer may continue using the new substrate material, confident that defects will be detected. Defective wafers may be sorted out early in the process, preventing downstream processing costs. Further analysis may lead to process adjustments that mitigate the defect without changing the material supplier.

Defect data may be fed back into process control systems to adjust etching parameters, reducing defect occurrence. Information may be shared with the supplier to improve material quality. Detailed records of defect detection and corrective actions may support audits and ensure meeting customer requirements.

The method according to the invention may comprise several components that work together to enable rapid adaptation of object detection models in semiconductor manufacturing using the Model-Agnostic Meta-Learning (MAML) framework. The component pertaining to Data Collection and Preparation may involve creating a task distribution, which is a diverse set of defect detection tasks representing different defect types and manufacturing conditions. For each task, small, labelled datasets called support sets may be prepared for adaptation during the inner loop. Separate datasets known as query sets may be used to evaluate the model's performance after adaptation in the outer loop. These datasets may allow the machine learning model to learn from various scenarios, enhancing its ability to generalize and adapt quickly to new tasks. The MAML framework may utilize meta-trained parameters (θ) optimized during meta-training to serve as a good initialization for quick adaptation. The inner loop may involve task-specific adaptation, where the machine learning model adapts to each task using its support set. The outer loop may perform a meta-update, adjusting the machine learning model's initial parameters based on performance across tasks. This nested optimization process may enable the machine learning model to adapt rapidly to new defect types with minimal data. An object detection model architecture compatible with MAML, such as Faster R-CNN, YOLO, or SSD, may be selected as the base model, i.e. the machine learning model. The architecture may include a feature extractor that extracts features from wafer map images and detection heads that perform classification and localization tasks. The machine learning model may have to support gradient-based optimization and be suitable for the specific characteristics of wafer map images. To improve the machine learning model's robustness and generalization capabilities, especially when dealing with scarce or imbalanced data, data augmentation techniques may be applied. Methods like rotation, scaling, flipping, and synthetic defect generation may increase data diversity. Additionally, strategies for handling imbalanced data may be implemented to address class imbalance issues, ensuring the machine learning model does not become biased towards more prevalent classes. The method according to the invention is particularly designed for seamless integration with existing systems. It may connect with data pipelines for data acquisition and preprocessing, ensuring that wafer map images may be correctly formatted and normalized. Integration with Manufacturing Execution Systems (MES) may allow for real-time monitoring and decision-making based on outputs of the machine learning model. Deployment on edge computing devices may place fine-tuned machine learning models close to the production line, providing low-latency inference essential for high-speed manufacturing environments. This integration may ensure that the solution according to the invention enhances existing workflows without significant disruptions. To maintain effectiveness despite changes in manufacturing processes or defect patterns, the method according to the invention may incorporate performance monitoring tools to track accuracy over time. Feedback loops may be established to collect new data and update the machine learning model as needed. This continuous learning process may ensure the machine learning model remains effective in dynamic environments, adapting to new challenges as they arise.

There are several alternative implementations of the base object detection model, i.e. the machine learning model, within the MAML framework, each with its own set of advantages and disadvantages: Faster R-CNN may offer a high detection accuracy and may be effective for detecting complex and small defects due to its two-stage detection process. However, it may be computationally intensive, leading to slower inference times that may not meet real-time requirements in high-speed manufacturing environments. Additionally, it may require more memory and processing power, potentially increasing deployment costs. YOLO (You Only Look Once) may provide a real-time performance with efficient computation, making it suitable for deployment on edge devices where resources are limited. Its single-stage detection process may allow for quick inference, which is crucial for real-time defect detection. However, YOLO may have lower detection accuracy compared to two-stage detectors like Faster R-CNN. It may be less effective for detecting small or subtle defects, which are common in semiconductor manufacturing. Single Shot MultiBox Detector (SSD) may offer a balance between speed and accuracy. It may allow for flexible adjustments based on specific needs, making it possible to optimize for either higher speed or better accuracy as required. However, SSD may only provide moderate performance and may not excel in either extreme of speed or accuracy. It may not be the best choice if the highest possible accuracy or the fastest inference time is critical.

The above explanation of the embodiments describes the present invention in the context of examples. Of course, individual features of the embodiments can be freely combined with each other, provided that this is technically reasonable, without leaving the scope of the present invention.

## Claims

1. A method (100) for performing a detection of a specific anomalous pattern of manufacturing components (4), comprising:
- Providing (101) training data, the training data comprising a first set of images depicting manufacturing components (4) with different anomalous patterns,
- Training (102) a machine learning model (1) based on the provided training data for detecting the different anomalous patterns,
- Providing (103) a second set of images (3) depicting manufacturing components (4) with the specific anomalous pattern,
- Fine-tuning (104) the machine learning model (1) for detecting the specific anomalous pattern based on the second set of images (3),
- Performing (105) the detection of the specific anomalous pattern of manufacturing components (4) by utilizing the fine-tuned machine learning model (1).

2. The method (100) of claim 1, **characterized in that** a part of the training data is separated to be provided as validation data, wherein the method (100) further comprises after the training (102):
- Evaluating (106) the machine learning model (1) based on a metric that quantifies a precision of detecting the different anomalous patterns utilizing the validation data,
- Adapting the machine learning model (1) based on a result of the evaluation.

3. The method (100) of any one of the preceding claims, **characterized in that** the training (102) and the fine-tuning (104) are performed using different learning rates.

4. The method (100) of any one of the preceding claims, **characterized in that** the method (100) further comprises:
- Performing a rotation and/or scaling of individual images in the training data and/or the second set of images (3) before performing the training (102) and/or the fine-tuning (104), wherein the rotated and/or scaled individual images are respectively provided as new images for the training data and/or the second set of images (3).

5. The method (100) of any one of the preceding claims, **characterized in that** the method (100) further comprises:
- Generating synthetic images, the synthetic images depicting manufacturing components (4) with the different anomalous patterns and/or the specific anomalous pattern,
- Adding the generated synthetic images to the training data and/or the second set of images (3) before performing the training (102) and/or the fine-tuning (104).

6. The method (100) of any one of the preceding claims, **characterized in that** the manufacturing components (4) are wafers and the anomalous patterns represent defects in the wafers, wherein the method (100) further comprises:
- Initiating a deployment of the fine-tuned machine learning model (1) in a wafer production environment (5),
wherein the second set of images (3) is provided based on sensor data captured by at least one sensor (6) in the production environment (5) and the detection of the specific anomalous pattern is performed in the production environment (5).

7. The method (100) of any one of the preceding claims, **characterized in that** the training data and/or the second set of images (3) comprise labels that denote a respective anomalous pattern of the different anomalous patterns and/or the specific anomalous pattern in a respective image, wherein the training (102) and/or the fine-tuning (104) is performed as a supervised training using the labels.

8. The method (100) of any one of the preceding claims, **characterized in that** the training data and/or the second set of images (3) do not comprise labels for the different anomalous patterns and/or the specific anomalous pattern, wherein the training (102) and/or the fine-tuning (104) is performed as an unsupervised training.

9. The method (100) of any one of the preceding claims, **characterized in that**, in case the specific anomalous pattern is detected during performing (105) the detection, the method (100) further comprises at least one of the following steps:
- Initiating an alert, particularly to a manufacturing execution system, to trigger at least one automated workflow for equipment maintenance and/or process adjustments based on the detected specific anomalous pattern,
- Generating a report based on the detected specific anomalous pattern.

10. A computer program (20), comprising instructions which, when the computer program (20) is executed by at least one computer (10), cause the computer (10) to carry out the method (100) of any one of the preceding claims.

11. A data processing apparatus (10), comprising means for carrying out the method (100) of any one of claims 1 to 9.

12. A computer-readable storage medium (15) comprising instructions which, when executed by at least one computer (10), cause the computer (10) to carry out the steps of the method (100) of any one of claims 1 to 9.

## Amended claims

### Amended claims in accordance with Rule 137(2) EPC.

1. A method (100) for performing a detection of a specific anomalous pattern of manufacturing components (4), comprising:
- Providing (101) training data, the training data comprising a first set of images depicting manufacturing components (4) with different anomalous patterns, wherein a part of the training data is separated to be provided as validation data,
- Training (102) a machine learning model (1) based on the provided training data for detecting the different anomalous patterns,
- Evaluating (106) the machine learning model (1) based on a metric that quantifies a precision of detecting the different anomalous patterns utilizing the validation data,
- Adapting the machine learning model (1) based on a result of the evaluation,
- Providing (103) a second set of images (3) depicting manufacturing components (4) with the specific anomalous pattern,
- Fine-tuning (104) the machine learning model (1) for detecting the specific anomalous pattern based on the second set of images (3),
- Performing (105) the detection of the specific anomalous pattern of manufacturing components (4) by utilizing the fine-tuned machine learning model (1).

2. The method (100) of any one of the preceding claims, **characterized in that** the training (102) and the fine-tuning (104) are performed using different learning rates.

3. The method (100) of any one of the preceding claims, **characterized in that** the method (100) further comprises:
- Performing a rotation and/or scaling of individual images in the training data and/or the second set of images (3) before performing the training (102) and/or the fine-tuning (104), wherein the rotated and/or scaled individual images are respectively provided as new images for the training data and/or the second set of images (3).

4. The method (100) of any one of the preceding claims, **characterized in that** the method (100) further comprises:
- Generating synthetic images, the synthetic images depicting manufacturing components (4) with the different anomalous patterns and/or the specific anomalous pattern,
- Adding the generated synthetic images to the training data and/or the second set of images (3) before performing the training (102) and/or the fine-tuning (104).

5. The method (100) of any one of the preceding claims, **characterized in that** the manufacturing components (4) are wafers and the anomalous patterns represent defects in the wafers, wherein the method (100) further comprises:
- Initiating a deployment of the fine-tuned machine learning model (1) in a wafer production environment (5),
wherein the second set of images (3) is provided based on sensor data captured by at least one sensor (6) in the production environment (5) and the detection of the specific anomalous pattern is performed in the production environment (5).

6. The method (100) of any one of the preceding claims, **characterized in that** the training data and/or the second set of images (3) comprise labels that denote a respective anomalous pattern of the different anomalous patterns and/or the specific anomalous pattern in a respective image, wherein the training (102) and/or the fine-tuning (104) is performed as a supervised training using the labels.

7. The method (100) of any one of the preceding claims, **characterized in that** the training data and/or the second set of images (3) do not comprise labels for the different anomalous patterns and/or the specific anomalous pattern, wherein the training (102) and/or the fine-tuning (104) is performed as an unsupervised training.

8. The method (100) of any one of the preceding claims, **characterized in that**, in case the specific anomalous pattern is detected during performing (105) the detection, the method (100) further comprises at least one of the following steps:
- Initiating an alert, particularly to a manufacturing execution system, to trigger at least one automated workflow for equipment maintenance and/or process adjustments based on the detected specific anomalous pattern,
- Generating a report based on the detected specific anomalous pattern.

9. A computer program (20), comprising instructions which, when the computer program (20) is executed by at least one computer (10), cause the computer (10) to carry out the method (100) of any one of the preceding claims.

10. A data processing apparatus (10), comprising means for carrying out the method (100) of any one of claims 1 to 8.

11. A computer-readable storage medium (15) comprising instructions which, when executed by at least one computer (10), cause the computer (10) to carry out the steps of the method (100) of any one of claims 1 to 8.
